# EUROPÄISCHE PATENTSCHRIFT

(11) **EP 1 065 874 B1**
(45) Veröffentlichungstag und Bekanntmachung des Hinweises auf die Patenterteilung: **22.03.2006**
(21) Anmeldenummer: 00114221.5
(22) Anmeldetag: 03.07.2000
(51) Int. Cl.: H04N 1/32

(54) **Verfahren und Vorrichtung zur Speicherung von Sprach-/Faxnachrichten in einem intelligenten Netz**
Method and apparatus for storing voice and facsimile messages in an intelligent network
Methode et appareil de stockage de messages vocaux et de télécopieur dans un réseau intelligent

(30) Priorität: 02.07.1999 DE 19930746
(43) Veröffentlichungstag der Anmeldung: 03.01.2001
(73) Patentinhaber: SIEMENS AKTIENGESELLSCHAFT, 80333 München (DE)
(72) Erfinder: Offer, Gero, 70186 Stuttgart (DE)

(56) Entgegenhaltungen:
- WO-A-99/12328
- US-A- 5 508 817
- US-A- 5 684 862
- PATENT ABSTRACTS OF JAPAN vol. 016, no. 550 (E-1292), 19. November 1992 (1992-11-19) & JP 04 207843 A (SANYO ELECTRIC CO LTD), 29. Juli 1992 (1992-07-29)
- PATENT ABSTRACTS OF JAPAN vol. 018, no. 675 (E-1648), 20. Dezember 1994 (1994-12-20) & JP 06 268799 A (TOSHIBA CORP), 22. September 1994 (1994-09-22)

## Beschreibung

Die Erfindung betrifft ein Verfahren zur Speicherung von Sprach-/Faxnachrichten in einem intelligenten Netz nach dem Oberbegriff von Patentanspruch 1 und eine Vorrichtung zur Durchführung des Verfahrens nach dem Oberbegriff von Patentanspruch 6.

In Telekommunikationsnetzen besteht für einen ersten Teilnehmer, der einen zweiten abwesenden Teilnehmer anruft, die Möglichkeit, eine Sprach-/Faxnachricht beispielsweise in einem Teilnehmerendgerät oder auf einer Mailbox des zweiten Teilnehmers, die auf einem Server des Telekommunikationsnetzes vorhanden ist, zu hinterlassen. Der zweite Teilnehmer kann dann die Sprach-/Faxnachricht entweder direkt an seinem Teilnehmerendgerät bzw. durch Abfrage seiner Mailbox abrufen. In Komforttelefonen besteht zudem die Möglichkeit, daß sich der zweite Teilnehmer automatisch durch das Komforttelefon unter beispielsweise einer Mobiltelefon-Nummer anrufen und über eine eingegangene Sprach-/Faxnachricht informieren läßt.

Trotz der Möglichkeiten, die intelligente Netze den Teilnehmern bieten, besteht bisher für den ersten Teilnehmer außer durch einen Rückruf von dem zweiten Teilnehmer, der die Sprach-/Faxnachricht abgerufen hat, keine Möglichkeit, zu erfahren, ob, wann und von wem seine Sprach-/Faxnachricht abgerufen wurde.

Die der vorliegenden Erfindung zugrunde liegende Aufgabe liegt daher darin, ein Verfahren zur Speicherung von Sprach-/Faxnachrichten in einem intelligenten Netz und eine Vorrichtung zur Durchführung des Verfahrens anzugeben, die es dem ersten Teilnehmer ermöglichen, Informationen zu erhalten, ob seine Sprach-/Faxnachricht abgerufen wurde und wenn ja von wem und wann.

Diese Aufgabe wird durch ein Verfahren zur Speicherung von Sprach-/Faxnachrichten in einem intelligenten Netz mit den Merkmalen von Patentanspruch 1 und durch eine Vorrichtung zur Durchführung des Verfahrens mit den Merkmalen von Patentanspruch 6 gelöst. Weitergehende Ausführungsformen des Verfahrens sind den abhängigen Ansprüchen 2 bis 5 und weitergehende Ausführungsformen der Vorrichtung den abhängigen Patentansprüchen 7 und 8 entnehmbar.

Das erfindungsgemäße Verfahren zur Speicherung von Sprach-/Faxnachrichten in einem intelligenten Netz, wobei ein Netz-Server einen eingehenden Ruf eines Teilnehmers empfängt und bei einer Sprach-/Faxnachricht des eingehenden Rufes über eine Triggereinrichtung ein Sprach-/Faxspeicherdienst, der die Sprach-/Faxnachricht entweder auf einem Sprach-/Faxspeicher-Server oder in einem Teilnehmerendgerät des angerufenen Teilnehmers speichert, aufgerufen wird, ist dadurch gekennzeichnet, daß der Sprach-/Faxspeicherdienst eine zusammen mit der Sprach-/Faxnachricht übermittelte Teilnehmernummer im Sprach-/Faxspeicher-Server oder im Teilnehmerendgerät speichert, einen Timer im Netz-Server startet und bei einer entsprechenden Signalisierung ein erstes Flag im Sprach-/Faxspeicher-Server oder im Teilnehmerendgerät für einen Rückruf der Teilnehmernummer beim Abruf der Sprach-/Faxnachricht oder bei Überschreitung eines vorgegebenen Timerwertes setzt.

Dadurch besteht für einen rufenden Teilnehmer, der einem angerufenen Teilnehmer eine Sprach-/Faxnachricht hinterlassen will, die Möglichkeit, mit der Sprach-/Faxnachricht eine Teilnehmernummer zu übermitteln, die bei einem Abruf der Sprach-/Faxnachricht automatisch zurückgerufen wird. Dazu setzt der Sprach-/Faxspeicherdienst ein erstes Flag im Sprach-/Faxspeicher-Server oder im Teilnehmerendgerät. Wird vor einem Abruf der Sprach-/Faxnachricht ein vorgegebener Timerwert des Timers, der beim Speichern der Sprach-/Faxnachricht gestartet wurde, überschritten, so erfolgt ebenso ein Rückruf des Teilnehmers. Dadurch erfährt der Teilnehmer, daß seine Sprach-/Faxnachricht innerhalb einer vorgegebenen Zeitspanne nicht abgefragt wurde. Dies ist insbesondere bei zeitkritischen Sprach-/Faxnachrichten von Vorteil. Das erste Flag wird nicht gesetzt, wenn vor dem Speichern der Sprach-/Faxnachricht der Netz-Server eine entsprechende Signalisierung empfängt. Damit kann beispielsweise der anrufende Teilnehmer dem Netz-Server durch Eingabe einer bestimmten Ziffernkombination signalisieren, daß er keinen Rückruf wünscht. In diesem Fall wird die Sprach-/Faxnachricht wie auf einem normalen Anrufbeantworter gespeichert.

Vorzugsweise setzt der Sprach-/Faxspeicherdienst im Netz-Server ein zweites Flag, so daß die Gebühren des Rückrufes auf die Teilnehmernummer gebucht werden. Damit wird vorteilhafterweise vermieden, daß der angerufene Teilnehmer, für den die Sprach-/Faxnachricht vorliegt, die Gebühren für den Rückruf tragen muß.

Besonders bevorzugt wird durch den Rückruf eine Textnachricht an die Teilnehmernummer gesendet, wobei die Textnachricht entweder einen Zeitdatensatz des Abrufes der Sprach-/Faxnachricht oder eine Warnmeldung bei einer Überschreitung der vorgegebenen Zeitspanne aufweist.

Vorzugsweise wird die Textnachricht als SMS-Mitteilung an ein Mobiltelefon übertragen. Alternativ wird die Textnachricht vorzugsweise an einen Pager übertragen.

Ferner betrifft die Erfindung eine Vorrichtung zur Durchführung des Verfahrens, wobei ein Netz-Server eine Triggereinrichtung und eine Steuereinrichtung aufweist und wobei die Triggereinrichtung zum Aufrufen eines Sprach-/Faxspeicherdienstes die Steuereinrichtung ansteuert und die Steuereinrichtung mit einem Sprach-/Faxspeicher-Server oder mit einem Teilnehmerendgerät verbunden ist. Erfindungsgemäß weist der Netz-Server eine Rückrufeinrichtung zur Einleitung eines automatischen Rückrufes und einen Timer, der bei Überschreitung eines vorgegebenen Timerwertes die Rückrufeinrichtung startet, auf. Die Rückrufeinrichtung und der Timer werden dazu von der Steuereinrichtung angesteuert.

Vorzugsweise weist der Netz-Server eine Gebühreneinrichtung zur Erfassung von Gebühren auf, wobei die Gebühreneinrichtung von der Steuereinrichtung angesteuert wird.

Der Timer weist in einer besonders bevorzugten Ausführungsform einen Zähler, ein Register zur Speicherung des vorgegebenen Timerwertes und einen Vergleicher auf. Der Vergleicher vergleicht dabei den Registerinhalt und den Zählerstand und gibt bei Gleichstand ein Signal aus, das von der Steuereinrichtung ausgewertet wird.

Weitere Vorteile und Anwendungsmöglichkeiten ergeben sich aus der nachfolgenden Beschreibung von Ausführungsbeispielen in Verbindung mit der Zeichnung. In der Zeichnung zeigt
- Fig. 1: ein Blockschaltbild der Vorrichtung zur Speicherung von Sprach-/Faxnachrichten in einem intelligenten Netz, und
- Fig. 2: ein Flußdiagramm zur Erläuterung des erfindungsgemäßen Verfahrens zur Speicherung von Sprach-/Faxnachrichten in einem intelligenten Netz.

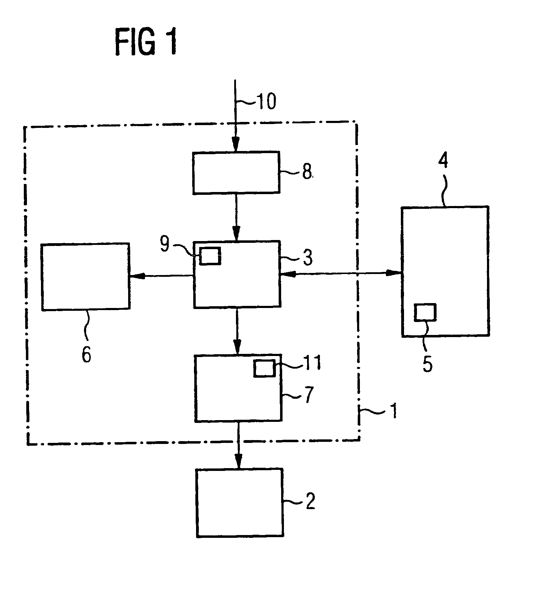

In Figur 1 ist ein Netz-Server 1 dargestellt, der eingehende Teilnehmerrufe empfängt.

Der Netz-Server 1 weist eine Trigger-Einrichtung 8, der die eingehenden Rufe 10 zugeführt werden, auf. Die Trigger-Einrichtung 8 ruft einen Sprach-/Faxspeicherdienst auf, wenn beispielsweise ein gerufener Teilnehmer seine Voice-Mailbox angeschaltet hat. Dazu überträgt die Triggereinrichtung 8 ein Aktivierungssignal zur Aktivierung des Sprach-/Faxspeicherdienstes an eine Steuereinrichtung 3 des Netz-Servers 1. Die Steuereinrichtung 3 ist mit einem Sprach-/Faxspeicher-Server 4 verbunden, auf den Sprach-/Faxnachrichten für Teilnehmer abgelegt werden. Der Sprach-/Faxspeicher-Server 4 weist ein erstes Flag 5 auf, das beim Ablegen einer Sprach-/Faxnachricht von der Steuereinrichtung 3 gesetzt wird, wenn ein rufender Teilnehmer einen automatischen Rückruf bezüglich seiner Sprach-/Faxnachricht anfordert.

Die Steuereinrichtung 3 des Netz-Servers 1 weist einen Timer 9 auf, der beim Ablegen einer Sprach-/Faxnachricht und wenn ein rufender Teilnehmer einen automatischen Rückruf anfordert, gestartet wird. Der Timer wiederum weist einen Zähler, ein Register und einen Vergleicher, der den Ausgangswert des Zählers und einen in dem Register gespeicherten Wert miteinander vergleicht, auf. In dem Register ist ein Wert entsprechend einer Zeitdauer abgelegt, der angibt, wann ein automatischer Rückruf erfolgen soll, wenn die Sprach-/Faxnachricht nicht abgefragt wurde. Dieser Wert ist von dem ersten rufenden Teilnehmer vorgebbar. Der Rückruf bzw. die Quittung wird unter anderem durch den Vergleicher eingeleitet, der bei einem Gleichstand des Zählerwertes und des im Register gespeicherten Wertes ein Signal ausgibt, das einen automatischen Rückruf auslöst.

Dazu wird eine Rückrufeinrichtung 6 des Netz-Servers 1 gestartet, die an die mit der Sprach-/Faxnachricht abgespeicherte Teilnehmernummer eine Textnachricht sendet. Die Textnachricht enthält eine Warnmeldung, daß die Sprach-/Faxnachricht nicht innerhalb der vom Teilnehmer, der die Sprach-/Faxnachricht hinterlassen hat, vorgegebenen Zeitspanne abgerufen wurde.

Wird dagegen die Sprach-/Faxnachricht innerhalb der vorgegebenen Zeitspanne abgerufen und ist das erste Flag 5 im Sprach-/Faxspeicher-Server 4 bezüglich der Sprach-/Faxnachricht für einen automatischen Rückruf gesetzt, so leitet die Steuereinrichtung 3 über die Rückrufeinrichtung 6 ebenfalls einen automatischen Rückruf an die mit der Sprach-/Faxnachricht abgelegte Teilnehmernummer ein. In diesem Fall wird dem der Teilnehmernummer entsprechenden Teilnehmer eine Textnachricht mit einem Zeitdatensatz, der den Zeitpunkt und das Datum des Abrufes der Sprach-/Faxnachricht enthält, und mit der Teilnehmernummer des Teilnehmers, der die Sprach-/Faxnachricht abgerufen hat, zugesandt.

Der Netz-Server 1 weist ferner eine Gebühreneinrichtung 7 auf, die die Gebühren des automatischen Rückrufes erfaßt und dem Teilnehmer, dessen Teilnehmernummer mit der Sprach-/Faxnachricht abgespeichert ist und der den automatischen Rückruf erhält, zuschlüsselt. Dazu weist die Gebühreneinrichtung ein zweites Flag 11 auf, das gesetzt wird, wenn der den automatischen Rückruf erhaltende Teilnehmer die Gebühren für den Rückruf übernehmen soll. Soll dagegen der Teilnehmer, für den die Sprach-/Faxnachricht hinterlassen wurde, die Gebühren übernehmen, bleibt das zweite Flag 11 ungesetzt. Die Gebühreneinrichtung 7 überträgt die Gebührendaten für einen Rückruf an ein Billing-Center 2, das die Gebühreninformationen auswertet und den entsprechenden Teilnehmern verrechnet. Diese Funktionalität kann selbstverständlich so administriert werden, daß der den Rückruf erhaltende Teilnehmer immer die Gebühren für den Rückruf trägt.

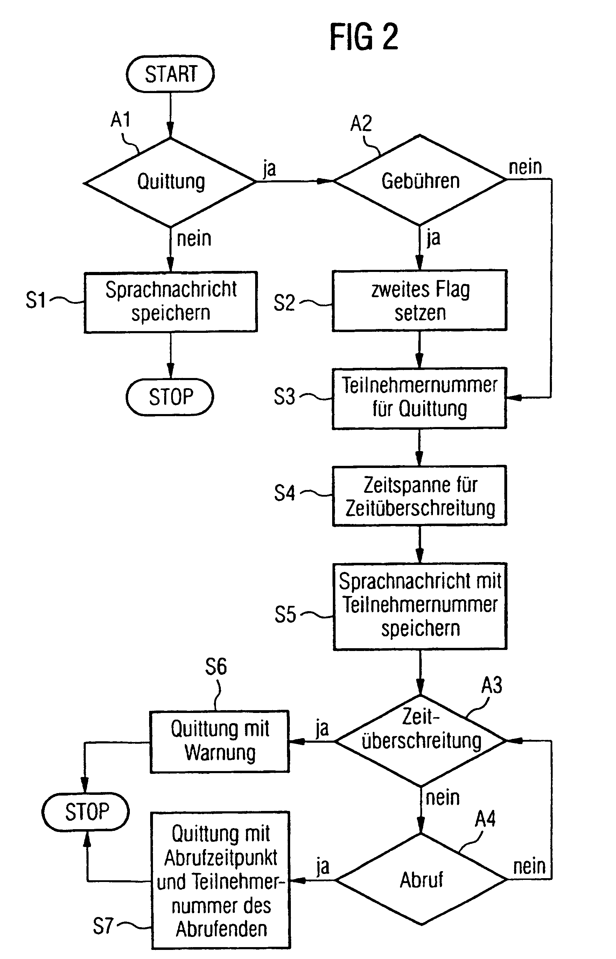

In Figur 2 ist ein Ablaufdiagramm des erfindungsgemäßen Verfahrens skizziert.

Ein erster Teilnehmer, der einen zweiten Teilnehmer anruft und nur dessen Voice-Mailbox erreicht, kann durch eine "Prompt and Collect"-Funktionalität in ein Auswahlmenü zur Einstellung eines automatischen Rückrufes (hier als Quittung bezeichnet) bezüglich seiner Sprach-/Faxnachricht gelangen.

Dazu kann der erste Teilnehmer über eine erste Abfrage Al entscheiden, ob er einen automatischen Rückruf bzw. eine Quittung wünscht. Wünscht der erste Teilnehmer keinen automatischen Rückruf bzw. keine Quittung, so kann er seine Sprach-/Faxnachricht für den zweiten Teilnehmer direkt speichern (Schritt S1). Optional kann der Dienst in der Art konfiguriert sein, daß der zweite Teilnehmer andernfalls über eine zweite Abfrage A2 entscheiden kann, ob er die Gebühren für den Rückruf bzw. die Quittung übernimmt. Übernimmt der erste Teilnehmer die Gebühren für den Rückruf bzw. die Quittung, so wird ein Flag in der Gebühreneinrichtung gesetzt (Schritt S2). Soll dagegen der zweite Teilnehmer die Gebühren für den Rückruf bzw. die Quittung übernehmen, so bleibt das Flag in der Gebühreneinrichtung ungesetzt.

In Schritt S3 wird die Teilnehmernummer für den Rückruf bzw. die Quittung vom ersten Teilnehmer signalisiert oder falls das Telekommunikationsnetz die Teilnehmernummer des ersten Teilnehmers bereitstellt, diese übernommen.

Daraufhin signalisiert der erste Teilnehmer eine Zeitspanne, die - sobald überschritten - einen automatischen Rückruf ohne Abruf der Sprach-/Faxnachricht auslöst (Schritt S4).

Anschließend wird in Schritt 5 die Sprach-/Faxnachricht des ersten Teilnehmers zusammen mit der Teilnehmernummer für die Quittung bzw. den Rückruf gespeichert. Ab diesem Zeitpunkt beginnt der Timer zu laufen, der für die Feststellung der Zeitüberschreitung bezüglich der Sprach-/Faxnachricht benötigt wird.

Wird die Sprach-/Faxnachricht nicht innerhalb einer vorgegebenen Zeitspanne vom zweiten Teilnehmer abgerufen, wird ein Rückruf bzw. eine Quittung mit einer Warnung an die mit der Sprach-/Faxnachricht abgespeicherten Teilnehmernummer gesendet (Abfrage A3, Schritt S6). Wird dagegen die Sprach-/Faxnachricht innerhalb der vorgegebenen Zeitspanne abgerufen, so wird an die mit der Sprach-/Faxnachricht abgespeicherten Teilnehmernummer ein Rückruf bzw. eine Quittung, die den Abrufzeitpunkt und die Teilnehmernummer des Abrufenden enthält, gesandt (Abfrage A4, Schritt S7).

Die Quittung für einen entsprechenden Teilnehmer kann dabei per SMS an ein Mobiltelefon oder per Textnachricht an einen Pager oder auch als automatische Sprachansage übermittelt werden. Denkbar ist beispielsweise auch eine Übermittlung des Quittungsrückrufes per E-Mail, falls anstelle der Teilnehmernummer eine E-Mail-Adresse eingegeben wurde.

## Patentansprüche

1. Verfahren zur Speicherung von Sprach-/Faxnachrichten in einem intelligenten Netz, in dem ein Netz-Server (1) einen eingehenden Ruf eines Teilnehmers empfängt und worin bei einer Sprach-/Faxnachricht des eingehenden Rufes über eine Triggereinrichtung (8) ein Sprach-/Faxspeicherdienst, der die Sprach-/Faxnachricht entweder auf einem Sprach-/Faxspeicher-Server (4) oder in einem Teilnehmerendgerät des angerufenen Teilnehmers speichert, aufgerufen wird, des Verfahren
**dadurch gekennzeichnet, daß**
der Sprach-/Faxspeicherdienst eine zusammen mit der Sprach-/Faxnachricht übermittelte Teilnehmernummer im Sprach-/Faxspeicher-Server (4) oder im Teilnehmerendgerät speichert, einen Timer im Netz-Server (1) startet und bei einer entsprechenden Signalisierung ein erstes Flag (5) im Sprach-/Faxspeicher-Server (4) oder im Teilnehmerendgerät für einen Rückruf der Teilnehmernummer bei einem Abruf der Sprach-/Faxnachricht oder bei Überschreitung eines vorgegebenen Timerwertes setzt.

2. Verfahren nach Anspruch 1,
**dadurch gekennzeichnet, daß**
der Sprach-/Faxspeicherdienst ein zweites Flag (11) im Netz-Server (1) setzt, so daß die Gebühren des Rückrufes auf die Teilnehmernummer gebucht werden.

3. Verfahren nach Anspruch 1 oder 2,
**dadurch gekennzeichnet, daß**
durch den Rückruf eine Textnachricht an die Teilnehmernummer gesendet wird und die Textnachricht entweder einen Zeitdatensatz des Abrufes der Sprach-/Faxnachricht oder eine Warnmeldung bei einer Überschreitung der vorgegebenen Zeitspanne aufweist.

4. Verfahren nach Anspruch 3,
**dadurch gekennzeichnet, daß**
die Textnachricht als SMS-Mitteilung an ein Mobiltelefon übertragen wird.

5. Verfahren nach Anspruch 3,
**dadurch gekennzeichnet, daß**
die Textnachricht an einen Pager übertragen wird.

6. Vorrichtung zur Speicherung von Sprach-/Faxnachrichten in einem intelligenten Netz, indem ein Netz-Server (1) eine Triggereinrichtung (8) und eine Steuereinrichtung (3) aufweist und wobei die Triggereinrichtung (8) zum Aufrufen eines Sprach-/Faxspeicherdienstes die Steuereinrichtung (3) ansteuert und die Steuereinrichtung (3) mit einem Sprach-/Faxspeicher-Server (4) oder mit einem Teilnehmerendgerät verbunden ist,
**dadurch gekennzeichnet, daß**
der Netz-Server (1) eine Rückrufeinrichtung (6) zur Einleitung eines automatischen Rückrufes und einen Timer (9), der bei Überschreitung eines vorgegebenen Timerwertes die Rückrufeinrichtung (6) startet, aufweist, wobei die Rückrufeinrichtung (6) und der Timer (9) von der Steuereinrichtung (3) angesteuert werden.

7. Vorrichtung nach Anspruch 6,
**dadurch gekennzeichnet, daß**
der Netz-Server (1) eine Gebühreneinrichtung (7) zur Erfassung von Gebühren aufweist, wobei die Gebühreneinrichtung (7) von der Steuereinrichtung (3) angesteuert wird.

8. Vorrichtung nach Anspruch 6 oder 7,
**dadurch gekennzeichnet, daß**
der Timer (9) einen Zähler, ein Register zur Speicherung des vorgegebenen Timerwertes und einen Vergleicher aufweist, wobei der Vergleicher den Registerinhalt und den Zählerstand vergleicht und bei Gleichstand ein Signal ausgibt, das von der Steuereinrichtung ausgewertet wird.

## Claims

1. Method for storing voice/fax messages in an intelligent network, in which a network server (1) receives an incoming call from a subscriber and wherein, in the case of a voice/fax message in the incoming call, a trigger device (8) is used to call up a voice/fax storage service which stores the voice/fax message either on a voice/fax storage server (4) or in a subscriber terminal of the called subscriber, the method being
**characterized in that**
the voice/fax storage service stores in the voice/fax storage server (4) or in the subscriber terminal a subscriber number transmitted together with a voice/fax message, starts a timer in the network server (1) and, when there is appropriate signalling, sets a first flag (5) in the voice/fax storage server (4) or in the subscriber terminal for the subscriber number to be called back when the voice/fax message is retrieved or when a prescribed timer value is exceeded.

2. Method according to Claim 1,
**characterized in that**
the voice/fax storage service sets a second flag (11) in the network server (1), so that the charges for callback are booked to the subscriber number.

3. Method according to Claim 1 or 2,
**characterized in that**
the callback sends a text message to the subscriber number, and the text message contains either a time data record for retrieval of the voice/fax message or a warning report if the prescribed time period has been exceeded.

4. Method according to Claim 3,
**characterized in that**
the text message is transmitted to a mobile telephone as an SMS communication.

5. Method according to Claim 3,
**characterized in that**
the text message is transmitted to a pager.

6. Apparatus for storing voice/fax messages in an intelligent network, in which a network server (1) has a trigger device (8) and a control device (3) and where the trigger device (8) drives the control device (3) to call up a voice/fax storage service, and the control device (3) is connected to a voice/fax storage server (4) or to a subscriber terminal,
**characterized in that**
the network server (1) has a callback device (6) for initiating automatic callback, and a timer (9) which starts the callback device (6) when a prescribed timer value is exceeded, the callback device (6) and the timer (9) being driven by the control device (3).

7. Apparatus according to Claim 6,
**characterized in that**
the network server (1) has a charge device (7) for recording charges, the charge device (7) being driven by the control device (3).

8. Apparatus according to Claim 6 or 7,
**characterized in that**
the timer (9) has a counter, a register for storing the prescribed timer value and a comparator, the comparator comparing the register content and the counter reading and, if they are the same, outputting a signal which is evaluated by the control device.

## Revendications

1. Procédé de mémorisation de messages vocaux ou de télécopies dans un réseau intelligent, dans lequel un serveur de réseau (1) reçoit un appel entrant d'un abonné et dans lequel, pour un message vocal ou une télécopie de l'appel entrant, un service de mémorisation de messages vocaux ou de télécopies qui mémorise le message vocal ou la télécopie soit sur un serveur de mémorisation de messages vocaux ou de télécopies (4) soit dans un terminal d'abonné de l'abonné appelé est appelé par l'intermédiaire d'un dispositif de déclenchement (8),
**caractérisé par le fait que** le service de mémorisation de messages vocaux ou de télécopies mémorise dans le serveur de mémorisation de messages vocaux ou de télécopies (4) ou dans le terminal d'abonné un numéro d'abonné transmis conjointement avec le message vocal ou la télécopie, démarre un temporisateur dans le serveur de réseau (1) et, en présence d'une signalisation correspondante, affecte un premier drapeau (5) dans le serveur de mémorisation de messages vocaux ou de télécopies (4) ou dans le terminal d'abonné en vue d'un rappel du numéro d'abonné lors d'une interrogation du message vocal ou de la télécopie ou lors du dépassement d'une valeur de temporisateur prédéterminée.

2. Procédé selon la revendication 1,
**caractérisé par le fait que** le service de mémorisation de messages vocaux ou de télécopies affecte un deuxième drapeau (11) dans le serveur de réseau (1) de telle sorte que le coût du rappel est facturé au numéro d'abonné.

3. Procédé selon la revendication 1 ou 2,
**caractérisé par le fait que**, par le rappel, un message textuel est envoyé au numéro d'abonné et le message textuel comporte soit un bloc de données temporelles de l'interrogation du message vocal ou de la télécopie soit un message d'avertissement lors d'un dépassement de l'intervalle de temps prédéterminé.

4. Procédé selon la revendication 3,
**caractérisé par le fait que** le message textuel est transmis comme information du type SMS à un téléphone mobile.

5. Procédé selon la revendication 3,
**caractérisé par le fait que** le message textuel est transmis à un téléavertisseur.

6. Dispositif de mémorisation de messages vocaux ou de télécopies dans un réseau intelligent, dans lequel un serveur de réseau (1) comporte un dispositif de déclenchement (8) et un dispositif de commande (3), dans lequel le dispositif de déclenchement (8) commande le dispositif de commande (3) pour appeler un service de mémorisation de messages vocaux ou de télécopies et dans lequel le dispositif de commande (3) est relié à un serveur de mémorisation de messages vocaux ou de télécopies (4) ou à un terminal d'abonné,
**caractérisé par le fait que** le serveur de réseau (1) comporte un dispositif de rappel (6) pour déclencher un rappel automatique et un temporisateur (9) pour démarrer le dispositif de rappel (6) en cas de dépassement d'une valeur de temporisateur prédéterminée, le dispositif de rappel (6) et le temporisateur (9) étant commandés par le dispositif de commande (3).

7. Dispositif selon la revendication 6,
**caractérisé par le fait que** le serveur de réseau (1) comporte un dispositif de taxation (7) pour l'acquisition de taxes, le dispositif de taxation (7) étant commandé par le dispositif de commande (3).

8. Dispositif selon la revendication 6 ou 7,
**caractérisé par le fait que** le temporisateur (9) comporte un compteur, un registre pour la mémorisation de la valeur de temporisateur prédéterminée et un comparateur, le comparateur comparant le contenu du registre et l'état du compteur et, en cas d'égalité, délivrant un signal qui est évalué par le dispositif de commande.
